# EUROPÄISCHE PATENTSCHRIFT

(11) **EP 2 953 775 B1**
(45) Veröffentlichungstag und Bekanntmachung des Hinweises auf die Patenterteilung: **11.10.2017**
(21) Anmeldenummer: 14701911.1
(22) Anmeldetag: 17.01.2014
(51) Int. Cl.: B29B 15/10, B29C 70/50, E06B 3/22

(54) **VERFAHREN ZUR HERSTELLUNG EINES PVC-LANGFASERTHERMOPLASTS**
METHOD FOR PRODUCING A PVC LONG FIBRE THERMOPLASTIC
PROCÉDÉ DE PRODUCTION D'UN THERMOPLASTIQUE À FIBRES LONGUES EN PVC

(30) Priorität: 07.02.2013 DE 102013101188
(43) Veröffentlichungstag der Anmeldung: 16.12.2015
(73) Patentinhaber: REHAU AG + Co, 95111 Rehau (DE)
(72) Erfinder: FISCHER, Katja, 96364 Marktrodach (DE); AL-SHEYYAB, Ahmad, 95111 Rehau (DE); HOLLERING, Stefan, 95111 Rehau (DE); SANDER, Ralf, 95494 Gesees (DE)
(86) Internationale Anmeldenummer: PCT/EP2014/000127
(87) Internationale Veröffentlichungsnummer: WO 2014/121890

(56) Entgegenhaltungen:
- WO-A1-01/81072
- WO-A1-01/81073
- WO-A1-2006/095101

## Beschreibung

Die Erfindung betrifft ein Verfahren zur Herstellung eines PVC-Langfaserthermoplasts.

Zur Armierung von Kunststoffprofilen, insbesondere aus Polyvinylchlorid (PVC), ist es im Stand der Technik bekannt, Verstärkungsfasern, z.B. in Form von Glasfasern, in die PVC-Matrix einzubinden. Dies kann beispielsweise mittels eines Extrusionsverfahrens erfolgen, bei dem trockene Verstärkungsfasern in endloser Form mit PVC ummantelt und granuliert werden (Langglasfaser-PVC). Nachteilig sind bei diesem Verfahren die schlechte Haftung zwischen den Fasern und der PVC-Matrix sowie die technischen Schwierigkeiten bzgl. der Imprägnierung der trockenen Fasern mit PVC (z.B. Faserspreizen, Schmelzeverteilung)

Bei der Extrusion von PVC-Profilen ist es ferner bekannt, zwecks Erzielung einer Armierung trockene Kurzglasfasern dem eingesetzten PVC-Pulver bzw. PVC-Granulat zuzugeben. Dieses Verfahren zeichnet sich dadurch aus, dass Kurzglasfasern vergleichsweise kostengünstig sind. Es besitzt jedoch den Nachteil, dass bei der direkten Verarbeitung von trockenen Glasfasern mit PVC ein hoher Verschleiß an den entsprechenden Maschinen und Werkzeugen, insbesondere der bzw. den Extruderschnecken, stattfindet und dabei gleichzeitig die Länge der Verstärkungsfasern durch die großen auftretenden Scherkräfte erheblich reduziert wird. Durch die geringe Faserlänge im Endprodukt und die auch hier nicht optimale Faser-Matrix-Haftung erreicht man somit nur einen Bruchteil der möglichen mechanischen Performance.

Bekannt sind außerdem Kurzglasfasergranulate auf Basis von PVC, die aus trockenen Fasern mit PVC-Material compoundiert und granuliert werden. Diese compoundierten Granulate sind - ebenso wie das zuvor beschriebene Langglasfaser-PVC - sehr teuer und erlauben daher praktisch keine wirtschaftliche Produktion. Nachteilig bei den Kurzglasfasergranulaten ist ferner, dass hier bereits bei der Compoundierung eine Reduzierung der Faserlänge stattfindet, die während eines nachfolgenden Extrusionsprozesses noch einmal weiter erheblich reduziert wird. Aufgrund der Tatsache, dass auch hier als Basis trockene Glasfasern verwendet werden, ist wiederum nur eine bedingt gute Haftung zwischen Faser und Matrix im Endprodukt festzustellen, wodurch sich die Armierungswirkung der Fasern weiter verschlechtert.

Die Druckschrift DE 10 2007 039 009 A1 offenbart eine Rahmen-Baugruppe für ein Kunststoff-Fenster, wobei die einzelnen Profile jeweils bereichsweise mit Verstärkungsfasern armiert sind. Die armierten Bereiche sind jeweils von unverstärkten Bereichen aus reinem PVC-Material überzogen, um eine einwandfreie Optik zu gewährleisten.

Die WO 01/81073 A1 beschreibt ein Verfahren zur Herstellung von armierten, bandförmigen Kunststoffprofilen. Hierzu wird ein aus einem Hybridgarn aufgebauter breiter Streifen erzeugt, welcher nachfolgend in einen Extruder mit einem Kunststoffmaterial umspritzt wird. Insgesamt wird mit dem vorbekannten Verfahren ein faserverstärktes Kunststoff-Endprodukt hergestellt. Einen ähnlichen Offenbarungsgehalt besitzt die WO 01/81072 A1. Die US 2008/0171200 A1 offenbart die Herstellung von Vorprodukten für die nachfolgende Verarbeitung in einem Spritzgussverfahren.

Der Erfindung liegt die Aufgabe zugrunde, ein Verfahren zur Herstellung eines PVC-Langfaserthermoplasts anzugeben, welches einerseits kostengünstig ist und andererseits die Herstellung von PVC-Kunststoff-Profilen mit sehr hoher mechanischer Performance ermöglicht.

Diese Aufgabe wird erfindungsgemäß gelöst durch die Merkmale des Patentanspruchs 1. Das erfindungsgemäße Verfahren beruht auf der Erkenntnis, dass durch die Verwendung eines Hybridgarnes das entsprechende Kunststoffmaterial dazu genutzt werden kann, um eine generell gute Bindung der Verstärkungsfasern zu PVC herzustellen. Das im Hybridgarn enthaltene Kunststoffmaterial fungiert somit sozusagen als "Haftvermittler" zwischen den Verstärkungsfasern und dem PVC-Material. Durch das Kunststoffmaterial, welches einerseits eine hohe Bindungsaffinität zu PVC aufweist und andererseits aber auch gut an den Verstärkungsfasern haftet, ist gewährleistet, dass die das Hybridgarn umgebende PVC-Ummantelung eine sehr ausgeprägte Bindung zu den enthaltenen Verstärkungsfasern aufweist. Darüber hinaus ist gewährleistet, dass die PVC-Ummantelung gemeinsam mit dem Kunststoffmaterial einen sehr guten mechanischen Schutz der im Hybridgarn enthaltenen Verstärkungsfasern bildet, wenn das erfindungsgemäß hergestellte PVC-Langfaserthermoplast beispielsweise in gestückelter Form in einem Extrusionsverfahren verarbeitet und dabei sehr hohen Scherbelastungen ausgesetzt wird. Durch die PVC-Ummantelung und das Kunststoffmaterial sind die Verstärkungsfasern zumindest anfangs mechanisch gut geschützt, so dass eine Verkürzung der Verstärkungsfasern durch die in der Extruderschnecke vorliegende Scherwirkung erst nach einer gewissen durchlaufenen Wegstrecke innerhalb des Extruders einsetzt. Dies hat im Ergebnis zur Folge, dass das Ausmaß der Zerkleinerung der Verstärkungsfasern bei PVC-Profilen, welche mit erfindungsgemäßem PVC-Langfaserthermoplast in gestückelter Form armiert werden, deutlich geringer ist, als wenn beispielsweise trockene Verstärkungsfasern direkt dem PVC-Pulver zugegeben werden. Gleichzeitig wird hierdurch auch die mechanische Belastung der Extruderschnecke bzw. der gesamten entsprechenden Maschine reduziert, so dass ein niedriger Verschleiß an den Apparaten festzustellen ist.

Das Hybridgarn kann entweder als Fertigmaterial (z.B. commingled yarn, beispielsweise Twintex®) von einer Rolle abgezogen und, z.B. nach einer Vorwärmung, bei der ein zumindest teilweises Aufschmelzen des Kunststoffmaterials stattfindet, mit PVC-Material ummantelt werden. Alternativ hierzu ist es auch möglich, als Einsatzmaterialien einerseits reine Verstärkungsfasern und andererseits reines Kunststoffmaterial einzusetzen, welche dann zunächst zu einem Hybridgarn verarbeitet werden. Dieses wird anschließend, ggf. online, mit PVC-Material ummantelt und hiermit zum PVC-Langfaserthermoplast weiterverarbeitet. Entsprechend ist das Kunststoffmaterial zweckmäßigerweise ebenfalls als Faser ausgebildet. Im Rahmen der Erfindung liegt es hierbei insbesondere, dass die Verstärkungs- und / oder Kunststofffasern endlos ausgebildet sind.

Der Begriff "Bindungsaffinität" meint, dass zwischen den beiden Bindungspartnern Kunststoffmaterial einerseits und PVC-Material andererseits eine ausgeprägte elektrostatische Anziehung vorliegt. Gemäß einer besonders bevorzugten Ausführungsform der Erfindung ist das Kunststoffmaterial ein Polyester, vorzugsweise Polybutylenterephthalat (PBT) und / oder Polyethlenterephthalat (PET). Polyester, insbesondere die vorgenannten beiden Ausführungsformen, weisen eine große elektrostatische Wechselwirkung mit PVC-Material auf, da Polyester eine ausgeprägt polare Molekularstruktur aufweisen. Denkbar ist auch der Einsatz von Polycarbonat und/oder einem ungesättigten Polyesterharz, ggf. auch in Kombination mit PET und/oder PBT.

Erfindungsgemäß wird das mit PVC ummantelte Hybridgarn, also das fertig hergestellte PVC-Langfaserthermoplast, in Stücke geschnitten. Diese Stücke weisen eine Länge von 3 bis 40 mm, z. B. 5 bis 30 mm, insbesondere 10 bis 20 mm auf.. Aufgrund des Durchmessers des PVC-Langfaserthermoplasts von weniger als 5 mm ergibt sich hieraus eine zumeist stäbchenförmige Gestalt des gestückelten PVC-Langfaserthermoplasts.

Erfindungsgemäß werden die Verstärkungsfasern vor Aufbringung der PVC-Ummantelung durch ein An- oder Aufschmelzen des Kunststoffmaterials im Hybridgarn vollständig mit Kunststoffmaterial bedeckt, so dass das entsprechend behandelte Hybridgarn eine äußere Oberfläche aus Kunststoffmaterial aufweist. Diese Maßnahme hat zur Folge, dass die PVC-Ummantelung praktisch ausschließlich das Kunststoffmaterial "sieht", mit dem es eine ausgeprägte Wechselwirkung eingeht und die zur innigen Verbindung zwischen diesen beiden Materialien führt. Die Verstärkungsfasern sind vollständig in das Kunststoffmaterial eingebettet und dieses bildet vor der PVC-Ummantelung eine geschlossene Oberfläche des Hybridgarns.

Zweckmäßigerweise sind die Verstärkungsfasern als Glas- und / oder Carbon- und / oder Aramidfasern ausgebildet, wodurch andere Materialien jedoch nicht ausgeschlossen sind.

Gegenstand der Erfindung ist ferner ein PVC-Langfaserthermoplast gemäß Anspruch 7.

Das erfindungsgemäße PVC-Langfaserthermoplast kann im Rahmen der Erfindung als endloser Armierungsstrang für Kunststoff-Extrusionsprofile verwendet werden. In diesem Zusammenhang ist insbesondere eine Armierung von Rohren oder Schläuchen denkbar, beispielsweise durch eine Umwicklung und / oder Umflechtung entsprechender Profile mit dem Armierungsstrang. Alternativ hierzu können die erfindungsgemäßen Armierungsstränge auch in hochsteife Profile integriert, insbesondere einextrudiert werden, also beispielsweise als Endlosstrang in entsprechende Extrusionsprofile, welche beispielsweise als Hohlprofile ausgebildet sind, einlaufen.

Erfindungsgemäß wird das PVC-Langfaserthermoplast in gestückelter Form verarbeitet, um hierbei PVC-Kunststoffprofile, welche insbesondere im Extrusionsverfahren hergestellt werden, zu armieren. Hierbei wird dem Extrusionsprozess anstelle des oder auch neben dem PVC-Granulat bzw. -Pulver PVC-Langfaserthermoplast in gestückelter Form mit einer Länge von 3 bis 40 mm zugegeben. Die in den PVC-Langfaserthermoplast-Stücken enthaltenen Verstärkungsfasern verteilen sich während des Extrusionsprozesses sehr fein und tragen hierdurch zur Armierung des Kunststoffprofils bei. Diese Armierung kann insbesondere im Querschnitt gesehen bereichsweise erfolgen, um beispielsweise Profile herzustellen, wie sie in der zuvor genannten Druckschrift DE 10 2007 039 001 A1 beschrieben sind. Durch die PVC-Ummantelung und auch das im Hybridgarn enthaltene Kunststoffmaterial werden die Verstärkungsfasern während des Extrusionsprozesses geschützt, so dass während des Extrusionsprozesses eine vergleichsweise geringe Verkürzung der durchschnittlichen Länge der Verstärkungsfasern stattfindet. Während bei der Verarbeitung von trockenen Verstärkungsfasern während des Extrusionsprozesses eine Verkürzung um häufig mehr als eine Größenordnung, beispielsweise also von mehreren Millimetern auf z. B. 300 bis 400 µm, stattfindet, ist bei dem erfindungsgemäßen Verfahren eine deutlich geringere Verkürzung festzustellen. Dies führt dazu, dass die durchschnittliche Länge der Verstärkungsfasern im extrudierten Kunststoffprofil vorzugsweise mindestens 0,5 mm, z.B. mindestens 1 mm, insbesondere mindestens 2 mm, z. B. mindestens 3 mm, beträgt. Somit ist mit Hilfe des erfindungsgemäßen PVC-Langfaserthermoplasts in gestückelter Form eine deutlich größere Faserlänge im fertigen Extrusionsprofil erzielbar, was sich äußerst positiv auf die mechanische Performance auswirkt.

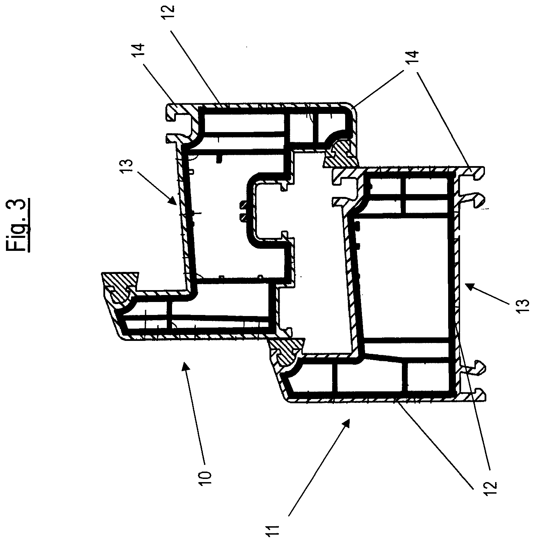

Gegenstand der Erfindung ist ferner ein Extrusionsprofil, insbesondere in Form eines Hohlprofils für z.B. Fenster oder Türen, mit
- einer das Profil bildenden Kunststoffmatrix aus PVC und
- in der Kunststoffmatrix, beispielsweise bereichsweise, enthaltenen Verstärkungsfasern,
wobei der faserverstärkte Bereich der Kunststoffmatrix ferner ein Polyester mit einem Gewichtsanteil von mindestens 1 %, z. B. mindestens 3 %, insbesondere mindestens 5 %, enthält. Dieses Profil resultiert aus der Verarbeitung eines erfindungsgemäßen PVC-Langfaserthermoplasts wie zuvor beschrieben, insbesondere in gestückelter Form. Das Polyester, welches erfindungsgemäß als Haftvermittler zwischen Verstärkungsfasern und PVC fungiert, bleibt als eigenständige Komponente im Profil enthalten und ist daher darin mit einem entsprechenden Gewichtsanteil nachweisbar. Nicht faserverstärkte Bereiche des Extrusionsprofils (vergl. 10 2007 039 001 A1 bzw. Fig. 3 in nachfolgendem Ausführungsbeispiel) sind hingegen frei von Polyester. Im Rahmen der Erfindung liegt es aber auch, dass sich der faserverstärkte Bereich über den gesamten Querschnitt des Extrusionsprofils erstreckt. Wie bereits zuvor beschrieben, handelt es sich bei diesem Polyester vorzugsweise um ein PBT und / oder ein PET. Zweckmäßigerweise sind die in der Kunststoffmatrix enthaltenen Verstärkungsfasern gestückelt und weisen eine durchschnittliche Länge von mindestens 0,5 mm, z.B. mindestens 1 mm, vorzugsweise mindestens 2 mm, z. B. mindestens 3 mm, auf. Im Rahmen der Erfindung liegt es aber auch, dass das PVC-Langfaserthermoplast als Endlosstrang in das Extrusionsprofil integriert wird, indem z.B. der Endlosstrang in das Extrusionswerkzeug einläuft.

Bei dem zuvor beschriebenen erfindungsgemäßen Extrusionsprofil kann es sich insbesondere um ein Fenster- und / oder Tür-Hohlkammerprofil oder auch allgemein um Profile, insbesondere Rahmenprofile, für industrielle Anwendungen handeln, die eine Wärmedämmfunktion besitzen und gleichzeitig über eine vergleichsweise hohe Stabilität verfügen müssen (z.B. im Bereich Kälte- und/oder Klimatechnik). Denkbar ist insbesondere aber auch die Herstellung von faserverstärkten Rohren aus PVC mit der erfindungsgemäßen Lehre.

Wie bereits erläutert, weist das erfindungsgemäße PVC-Langfaserthermoplast einen Durchmesser von weniger als 5 mm, z. B. 2 bis 4 mm, auf. Die PVC-Ummantelung besitzt zweckmäßigerweise eine Dicke von 0,5 bis 2 mm, insbesondere 0,5 bis 1 mm, während das Hybridgarn zweckmäßigerweise einen Durchmesser von 1 bis 4 mm, z. B. 2 bis 3 mm, aufweist. Der Volumenanteil der Verstärkungsfasern im gesamten PVC-Langfaserthermoplast beträgt zweckmäßigerweise 10 bis 50 %, z. B. 20 bis 40 %, insbesondere 20 bis 30 %. Der Gewichtsanteil der Verstärkungsfasern im gesamten PVC-Langfaserthermoplast beträgt hingegen zweckmäßigerweise 20 bis 60 %, z. B. 30 bis 50 %, insbesondere 30 bis 40 %.

Im Folgenden wird die Erfindung anhand einer lediglich ein Ausführungsbeispiel darstellenden Zeichnung ausführlich erläutert. Es zeigen schematisch:
- Fig. 1a-c: ein erfindungsgemäßes Verfahren zur Herstellung eines PVC-Langfaserthermoplasts,
- Fig. 2a-d: ein alternatives erfindungsgemäßes Verfahren und
- Fig. 3: ein mittels der erfindungsgemäßen Lehre hergestelltes Flügel- bzw. Blendrahmen-Profil für ein Fenster oder eine Tür aus Kunststoff.

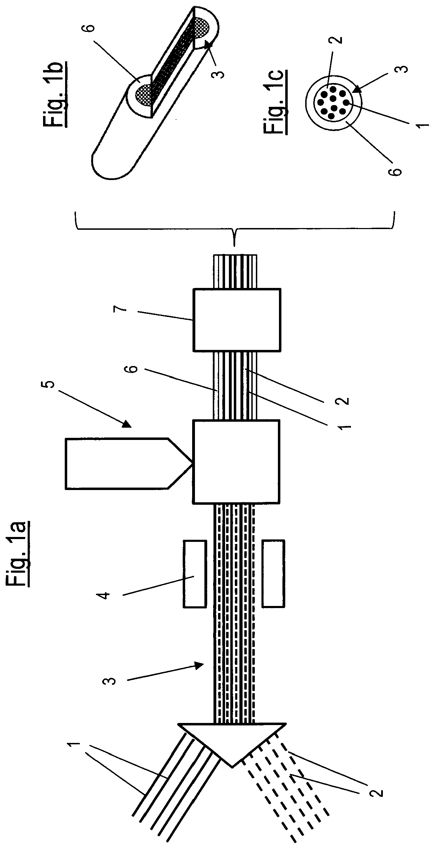

Die Fig. 1 a zeigt ein Verfahren zur Herstellung eines PVC-Langfaserthermoplasts. Es ist erkennbar, dass zunächst ein sowohl Verstärkungsfasern 1 als auch Fasern aus Kunststoffmaterial 2 enthaltendes Hybridgarn 3 hergestellt wird, wobei die Fasern 1, 2 jeweils endlos ausgebildet sind. Das Kunststoffmaterial 2 ist derart ausgewählt, dass es eine hohe Bindungsaffinität zu PVC aufweist. Im Ausführungsbeispiel besteht das Kunststoffmaterial 2 aus einem Polyester, beispielsweise PBT und / oder PET. Das aus der Vereinigung von Verstärkungsfasern 1 und Kunststoffmaterial 2 gewonnene Hybridgarn 3 wird zunächst in einer Vorwärmeinrichtung vorgewärmt, wodurch ein Anschmelzen des Kunststoffmaterials 2 im Hybridgarn 3 hervorgerufen wird. Dieses Anschmelzen führt dazu, dass die Verstärkungsfasern 1 vollständig mit Kunststoffmaterial 2 überzogen werden, so dass das entsprechend behandelte Hybridgarn 3 eine geschlossene äußere Oberfläche aus Kunststoffmaterial 2 aufweist. Dies ist anhand der Querschnittdarstellung des PVC-Langfaserthermoplasts in Fig. 1c erkennbar. Anschließend wird das so behandelte Hybridgarn 3 in einem Extruder 5 online mit PVC ummantelt, wobei aufgrund der hohen Bindungsaffinität des Polyesters 2 zu Polyvinylchlorid eine innige Verbindung der äußeren Oberfläche des Hybridgarns 3 mit der PVC-Ummantelung 6 hergestellt wird. Das nach Durchlaufen einer Kalibrier- und Abkühleinrichtung 7 fertig hergestellte PVC-Langfaserthermoplast ist in der Fig. 1b in einem dreidimensionalen Schnitt sowie in Fig. 1 c im Querschnitt dargestellt. Man sieht, dass an der Grenzfläche zwischen PVC-Ummantelung 6 und Hybridgarn 3 eine geschlossene Oberfläche aus Polyester vorliegt, welche eine sehr gute Anbindung des PVC ermöglicht. Die Verstärkungsfasern 1 sind vollständig in die Matrix des Polyester-Kunststoffmaterials 2 eingebettet. Das PVC-Langfaserthermoplast wird in Stäbchen mit einer Länge von z. B. 10 bis 20 mm geschnitten.

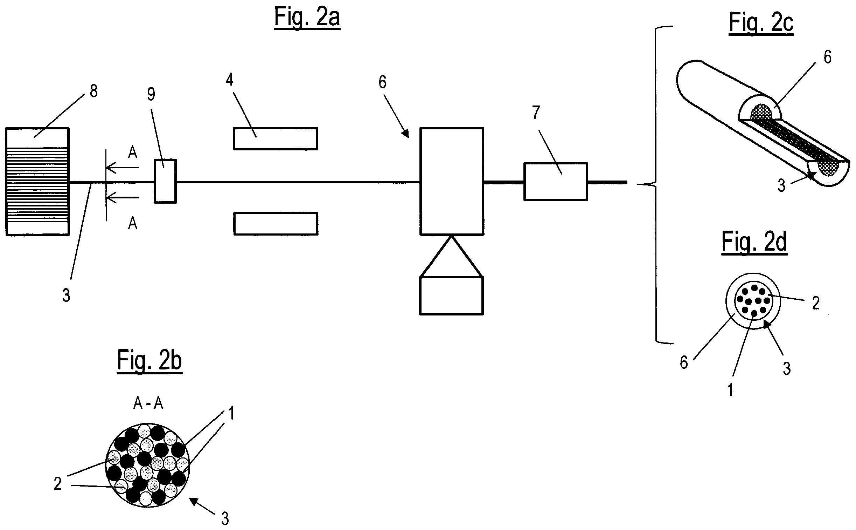

Beim Ausführungsbeispiel gemäß Fig. 2a wird ein vorgefertigtes Hybridgarn 3 (z.B. commingled yarn, insbes. Twintex ®) von einer Rolle 8 abgezogen, welches wiederum sowohl Verstärkungsfasern 1 als auch Polyester-Kunststofffasern 2 enthält (vergl. Schnitt A-A in Fig. 2a, dargestellt in Fig. 2b). Danach durchläuft das Hybridgarn 3 eine Handlingseinrichtung 9 zur Führung des Hybridgarns 3 und anschließend analog eine Vorwärmeinrichtung 4. Hierbei erfolgt das bereits beschriebene Anschmelzen der Kunststofffasern 2, so dass sich eine Hybridgarnoberfläche aus Polyester-Material 2 bildet (s. Fig. 2c, d). Es erfolgt anschließend analog die Aufbringung einer PVC-Ummantelung 6 des Hybridgarns 3 in einem Extruder 5. Nach Durchlauf der Kalibrier- und Abkühleinrichtung 7 erhält man ein PVC-Langfaserthermoplast analog zum Verfahren gemäß Fig. 1. Die Verstärkungsfasern 1 sind im Ausführungsbeispiel als Glasfasern ausgebildet.

Das gemäß den Fig. 1 bzw. 2 hergestellte PVC-Langfaserthermoplast weist somit ein sowohl Verstärkungsfasern 1 als auch Kunststoffmaterial 2 enthaltendes Hybridgarn 3 und eine das Hybridgarn 3 überziehende Ummantelung 6 aus PVC auf, wobei das Hybridgarn 3 aufgrund der hohen Bindungsaffinität zwischen dem Kunststoffmaterial 2 aus Polyester und PVC innig mit der Ummantelung 6 verbunden ist.

Das gemäß den Fig. 1 bzw. 2 hergestellte PVC-Langfaserthermoplast kann in gestückelter Form zur Herstellung von extrudierten PVC-Kunststoffprofilen, insbesondere Hohlkammerprofilen 10, 11 wie in Fig. 3 dargestellt, eingesetzt werden. Fig. 3 zeigt einen Querschnitt durch ein Flügelrahmenprofil 10 und ein Blendrahmenprofil 11 einer Rahmen-Baugruppe für ein zu rahmendes Flächentragelement, insbesondere eines Fensters oder einer Tür. Die Profile 10,11 weisen (in Fig. 3 geschwärzt dargestellte) Verstärkungsbereiche 12 aus faserverstärktem PVC-Kunststoff auf. Die Herstellung dieser Profile geschieht wie folgt: Die Verstärkungsbereiche 12 der PVC-Kunststoffprofile 10,11 werden aus einem (wie beispielsweise in Fig. 1, 2 beschrieben hergestellten) PVC-Langfaserthermoplast in gestückelter Form mit einer Länge von beispielsweise 10 bis 20 mm hergestellt. Die im PVC-Langfaserthermoplast enthaltenen Verstärkungsfasern 1 verteilen sich während der Extrusionsprozesse fein im PVC-Profil 10, 11, und zwar in den in Fig. 3 dargestellten faserverstärkten Bereichen 12. Die in Fig. 3 nicht näher dargestellten Verstärkungsfasern 1 tragen so zur Armierung des Kunststoffprofils bei. Die Verstärkungsfasern 1 des PVC-Langfaserthermoplasts werden durch das Polyester-Kunststoffmaterial 2 sowie die PVC-Ummantelung 6 während des Extrusionsprozesses geschützt, so dass während des Extrusionsprozesses eine vergleichsweise geringe Verkürzung der durchschnittlichen Länge der Verstärkungsfasern 1 stattfindet. Die durchschnittliche Länge der gestückelten Verstärkungsfasern 1 in den Verstärkungsbereichen 12 der extrudierten PVC-Kunststoffprofile 10, 11 beträgt mindestens 1 mm, z. B. mindestens 2 mm. Aufgrund des Einsatzes des erfindungsgemäßen PVC-Langfaserthermoplasts enthalten die Verstärkungsbereiche 12 der PVC-Kunststoffmatrix 13 der Profile 11 ein Polyester 2 mit einem Gewichtsanteil von mindestens 1 %, z. B. mindestens 3 %. Als Polyester 2 wird, wie bereits erwähnt, ein PBT und / oder ein PET eingesetzt. In den nicht faserverstärkten Bereichen 14 der PVC-Kunststoffmatrix 13 ist hingegen kein Polyester 2 vorhanden. Die unverstärkten Bereiche 14 bedecken zur äußeren Oberfläche der Profile 10, 11 hin die Verstärkungsbereiche 12 vollständig, um eine einwandfreie Optik der Profile 10, 11 zu gewährleisten.

Im Rahmen der Erfindung liegt es generell aber auch, dass der gesamte Querschnitt des PVC-Kunststoffprofils mittels des erfindungsgemäßen PVC-Langfaserthermoplasts faserverstärkt wird.

Im Rahmen der Erfindung liegt es ferner, alternativ zu einem Fenster- bzw. Türprofil beispielsweise PVC-Rohre entsprechend zu armieren.

## Patentansprüche

1. Verfahren zur Herstellung eines PVC-Langfaserthermoplasts mit einem Durchmesser von weniger als 5 mm,
- wobei zunächst mindestens ein sowohl Verstärkungsfasern (1) als auch Kunststoffmaterial (2) enthaltendes Hybridgarn (3) hergestellt wird,
- wobei das Kunststoffmaterial (2) derart ausgewählt wird, dass es eine hohe Bindungsaffinität zu PVC aufweist,
- wobei die Verstärkungsfasern (1) durch ein An- oder Aufschmelzen des Kunststoffmaterials (2) im Hybridgarn (3) vollständig in das Kunststoffmaterial (2) eingebettet werden, so dass das entsprechend behandelte Hybridgarn (3) eine geschlossene äußere Oberfläche aus Kunststoffmaterial (2) aufweist,
- wobei danach das Hybridgarn (3) im Wege eines Extrusionsverfahrens mit PVC ummantelt und hierbei aufgrund der hohen Bindungsaffinität des Kunststoffmaterials (2) innig mit der PVC-Ummantelung (6) verbunden wird, und
- wobei das mit PVC ummantelte Hybridgarn (3) in Stücke mit einer Länge von 3 bis 40 mm geschnitten wird.

2. Verfahren nach Anspruch 1, **dadurch gekennzeichnet, dass** das Kunststoffmaterial (2) ebenfalls faserförmig ausgebildet ist.

3. Verfahren nach Anspruch 1 oder 2, **dadurch gekennzeichnet, dass** die Verstärkungs-und / oder Kunststofffasern (1, 2) endlos ausgebildet sind.

4. Verfahren nach einem der Ansprüche 1-3, **dadurch gekennzeichnet, dass** das Kunststoffmaterial (2) ein Polyester, vorzugsweise PBT und / oder PET, ist.

5. Verfahren nach einem der Ansprüche 1-4, **dadurch gekennzeichnet, dass** die Verstärkungsfasern (1) als Glas- und / oder Carbon- und / oder Aramidfasern ausgebildet sind.

6. PVC-Langfaserthermoplast mit einem Durchmesser von weniger als 5 mm mit
- mindestens einem sowohl Verstärkungsfasern (1) als auch Kunststoffmaterial (2) enthaltenden Hybridgarn (3) und
- einer das Hybridgarn (3) überziehenden Ummantelung (6) aus PVC,
- wobei die Verstärkungsfasern (1) vor Aufbringung der PVC-Ummanteluna (6) durch ein An- oder Aufschmelzen des Kunststoffmaterials (2) im Hybridgarn (3) vollständig in das Kunststoffmaterial (2) eingebettet werden, so dass das entsprechend behandelte Hvbridgarn (3) eine geschlossene äußere Oberfläche aus Kunststoffmaterial (2) aufweist,
- wobei das Hybridgarn (3) aufgrund einer hohen Bindungsaffinität zwischen Kunststoffmaterial (2) und PVC innig mit der PVC-Ummantelung (6) verbunden ist, und
- wobei das mit PVC ummantelte Hybridgarn (3) in Stücke mit einer Länge von 3 bis 40 mm geschnitten ist.

7. Verfahren zur Herstellung von PVC-Kunststoffprofilen (10, 11), insbesondere Hohlprofilen, zum Beispiel für Fenster oder Türen, wobei aus einem PVC-Granulat bzw. -Pulver das PVC-Kunststoffprofil (10, 11) extrudiert wird, **dadurch gekennzeichnet, dass** dem Extrusionsprozess ein gestückeltes PVC-Langfaserthermoplast nach Anspruch 6 zugegeben wird, wobei die in den PVC-Langfaserthermoplast-Stücken enthaltenen Verstärkungsfasern (1) sich während des Extrusionsprozesses im Kunststoffprofil (10, 11), beispielsweise bereichsweise, fein verteilen und hierdurch zur Armierung des Kunststoffprofils (10, 11) beitragen, und wobei die Verstärkungsfasern (1) durch die PVC-Ummantelung (6) und das im Hybridgarn (3) enthaltene Kunststoffmaterial (2) während des Extrusionsprozesses geschützt werden, so dass während des Extrusionsprozesses eine vergleichsweise geringe Verkürzung der durchschnittlichen Länge der Verstärkungsfasern (1) stattfindet.

8. Verfahren nach Anspruch 7, **dadurch gekennzeichnet, dass** die durchschnittliche Länge der Verstärkungsfasern (1) im extrudierten Kunststoffprofil mindestens 0,5 mm, z.B. mindestens 1 mm, vorzugsweise mindestens 2 mm, beträgt.

## Claims

1. A method for producing a PVC long-fibre thermoplastic having a diameter of less than 5 mm,
- wherein firstly at least one hybrid yarn (3) containing both reinforcing fibres (1) and plastics material (2) is produced,
- wherein the plastics material (2) is selected such that it has a high binding affinity to PVC,
- wherein the reinforcing fibres (1) are completely embedded in the plastics material (2) by melting or fusing the plastics material (2) in the hybrid yarn (3) such that the hybrid yarn (3) that has been treated in this way has a continuous outer surface composed of plastics material (2),
- wherein the hybrid yarn (3) is then sheathed with PVC, preferably by means of an extrusion method, and is intimately connected with the PVC sheath (6) during this process owing to the high binding affinity of the plastics materials (2), and
- wherein the hybrid yarn (3) sheathed with PVC is cut into pieces having a length of 3 to 40 mm.

2. The method according to claim 1, **characterised in that** the plastics material (2) is likewise in a fibrous form.

3. The method according to claim 1 or 2, **characterised in that** the reinforcing fibres and / or plastics fibres (1, 2) are in a continuous form.

4. The method according to one of claims 1-3, **characterised in that** the plastics material (2) is a polyester, preferably PBT and / or PET.

5. The method according to one of claims 1-4, **characterised in that** the reinforcing fibres (1) are in the form of glass fibres and/or carbon fibres and/or aramid fibres.

6. A PVC long-fibre thermoplastic having a diameter of less than 5 mm with
- at least one hybrid yarn (3) containing both reinforcing fibres (1) and plastics material (2) and
- a sheath (6) composed of PVC covering the hybrid yarn (3),
- wherein the reinforcing fibres (1) are completely embedded in the plastics material (2) before applying the PVC sheath (6) by melting or fusing the plastics material (2) in the hybrid yarn (3) such that the hybrid yarn (3) that has been treated in this way has a continuous outer surface composed of plastics material (2),
- wherein the hybrid yarn (3) is intimately connected with the PVC sheath (6) owing to a high binding affinity between plastics material (2) and PVC, and
- wherein the hybrid yarn (3) sheathed with PVC is cut into pieces having a length of 3 to 40 mm.

7. A method for producing PVC plastics profiles (10, 11), in particular hollow profiles, for example for windows or doors, wherein the PVC plastics profile (10, 11) is extruded from PVC pellets or powder, **characterised in that** a PVC long-fibre thermoplastic according to claim 6 which has been cut into pieces is added to the extrusion process, wherein the reinforcing fibres (1) contained in the PVC long-fibre thermoplastic pieces are dispersed in the plastics profile (10, 11) during the extrusion process, e.g. in some areas, and thereby contribute to the reinforcement of the plastics profile (10, 11), and wherein the reinforcing fibres (1) are protected during the extrusion process by the PVC sheath (6) and the plastics material (2) contained in the hybrid yarn (3), so that comparatively little shortening of the average length of the reinforcing fibres (1) takes place during the extrusion process.

8. The method according to claim 7, **characterised in that** the average length of the reinforcing fibres (1) in the extruded plastics profile is at least 0.5 mm, e.g. at least 1 mm and preferably at least 2 mm.

## Revendications

1. Procédé de fabrication d'un thermoplastique PVC à fibres longues, ayant un diamètre de moins de 5 mm,
- au moins un fil hybride (3) contenant aussi bien des fibres de renforcement (1) que de la matière synthétique (2) étant d'abord fabriqué,
- la matière synthétique (2) étant sélectionnée de manière à ce qu'elle présente une affinité de liaison au PVC élevée,
- les fibres de renforcement (1) étant entièrement incluses dans la matière synthétique (2) par assemblage par fusion ou par fusion de la matière synthétique (2) dans le fil hybride (3), de sorte que le fil hybride (3) traité de manière correspondante présente une surface extérieure fermée en matière synthétique (2),
- le fil hybride (3) étant ensuite enrobé avec du PVC par voie d'un procédé d'extrusion et étant intimement relié à l'enrobage PVC (6) en raison de l'affinité de liaison élevée de la matière synthétique (2), et
- le fil hybride (3) enrobé avec le PVC étant découpé en morceaux ayant une longueur de 3 à 40 mm.

2. Procédé selon la revendication 1, **caractérisé en ce que** la matière synthétique (2) est également réalisée en forme de fibre.

3. Procédé selon la revendication 1 ou 2, **caractérisé en ce que** les fibres de renforcement et/ou les fibres synthétiques (1, 2) sont réalisées sans fin.

4. Procédé selon l'une quelconque des revendications 1 à 3, **caractérisé en ce que** la matière synthétique (2) est un polyester, de préférence du PBT et/ou du PET.

5. Procédé selon l'une quelconque des revendications 1 à 4, **caractérisé en ce que** les fibres de renforcement (1) sont réalisées comme fibres de verre et/ou fibres de carbone et/ou fibres d'aramide.

6. Thermoplastique PVC à fibres longues, ayant un diamètre de moins de 5 mm, comprenant
- au moins un fil hybride (3) contenant aussi bien des fibres de renforcement (1) que de la matière synthétique (2) et
- un enrobage (6) en PVC, revêtant le fil hybride (3),
- les fibres de renforcement (1) étant entièrement incluses dans la matière synthétique (2) par assemblage par fusion ou par fusion de la matière synthétique (2) dans le fil hybride (3), de sorte que le fil hybride (3) traité de manière correspondante présente une surface extérieure fermée en matière synthétique (2),
- le fil hybride (3), en raison d'une affinité de liaison élevée entre la matière synthétique (2) et le PVC, étant intimement relié à l'enrobage PVC (6), et
- le fil hybride (3) enrobé avec le PVC étant découpé en morceaux ayant une longueur de 3 à 40 mm.

7. Procédé de fabrication de profilés plastiques en PVC (10, 11), notamment de profilés creux, par exemple pour des fenêtres ou des portes, le profilé plastique en PVC (10, 11) étant extrudé à partir de granulés en PVC ou de poudre en PVC, **caractérisé en ce qu'**un thermoplastique PVC à fibres longues découpé, selon la revendication 6, est ajouté au processus d'extrusion, les fibres de renforcement (11) contenues dans les morceaux de thermoplastique PVC à fibres longues se répartissant finement dans le profilé plastique (10, 11), par exemple par zones, pendant le processus d'extrusion et contribuant ainsi à armer le profilé plastique (10, 11), et les fibres de renforcement (1) étant protégées pendant le processus d'extrusion par l'enrobage PVC (6) et la matière plastique (2) contenue dans le fil hybride, de sorte que pendant le processus d'extrusion un raccourcissement de la longueur moyenne des fibres de renforcement (1) comparativement moindre a lieu.

8. Procédé selon la revendication 7, **caractérisé en ce que** la longueur moyenne des fibres de renforcement (1) dans le profilé plastique extrudé est d'au moins 0, 5mm, par ex. d'au moins 1 mm, de préférence d'au moins 2 mm.
